# EUROPEAN PATENT SPECIFICATION

(11) **EP 3 587 306 B1**
(45) Date of publication and mention of the grant of the patent: **09.06.2021**
(21) Application number: 19167154.4
(22) Date of filing: 03.04.2019
(51) Int. Cl.: B65F 1/06, B29C 65/02

(54) **BAGGING MECHANISM FOR TRASH BAGS AND SMART TRASH RECEPTACLE**
ABSACKMECHANISMUS FÜR MÜLLSÄCKE UND INTELLIGENTE MÜLLBEHÄLTER
MÉCANISME DE MISE EN SACHET POUR SACS POUBELLES ET RÉCIPIENT DE DÉCHETS INTELLIGENT

(30) Priority: 16.06.2018 CN 201810623551; 16.06.2018 CN 201810623552
(43) Date of publication of application: 01.01.2020
(73) Proprietor: Shanghai Townew Intelligent Technology Co., Ltd., Shanghai 201203 (CN)
(72) Inventor: LI, Jianxiang, Shanghai 201203 (CN); LI, Le, Shanghai 201203 (CN)
(74) Representative: Piticco, Lorena

(56) References cited:
- CN-A- 106 185 105
- CN-A- 106 241 110
- CN-A- 106 564 717
- CN-B- 104 692 006
- JP-U- H0 595 903
- KR-A- 20160 040 179
- US-A1- 2006 218 880
- US-A1- 2011 167 772

## Description

### TECHNICAL FIELD

The present invention relates to the field of smart trash receptacles and, in particular, to a smart trash receptacle comprising a bagging mechanism.

### BACKGROUND

With the development of science and technology, trash receptacles are becoming more and more intelligent. Most existing smart trash receptacles available in the marketplace do not have a mechanism for sealing and bagging trash bags. Instead, they are only capable of cover opening/closing based on automatic sensing and thus simple in functionality, or designed to use a drawstring trash bag with a string around its open end. In order to bag trash, the string can be drawn out so that the open end of the trash bag is gradually narrowed with the portion of the string remaining around the open end increasingly reduced. Although this approach is simple, the drawstring trash bag as a consumable costs much and is not favorable to resource conservation and utilization, and the approach itself relies totally on manual bagging and is absent of automation. There are also some trash receptacles allowing semi-automatic bagging by using sealing tapes with a tape bagging assembly equipped outside or on the top of the receptacle. During the bagging process, the trash bag is manually taken out from the receptacle and narrowed around the open end. The narrowed portion is then placed through an opening of the tape bagging assembly, with the portions on both sides thereof being held by the hands in order to enable sealing and closure of the trash bag. This bagging solution still involves much manual intervention, making it only semi-automatic rather than fully-automatic. Moreover, the sealing tends to be inadequate and suffer from water seepage.

CN 106 185 105 A and JP H05 95903 U disclose known smart trash receptacles comprising a bagging mechanism disposed within a body of the trash receptacle. CN 104 692 006 B and CN 106 241 110 A disclose other instances of known bagging mechanisms for smart trash receptacles.

Therefore, how to address the issue that conventional smart trash receptacles are incapable of automatically trash bagging in a simple and reliable way, or are only capable of semi-automatic trash bagging, with insufficient bag sealing, insecure sealing and low loading capacity remains a critical technical problem sought to be solved by those skilled in the art.

### SUMMARY

It is an object of the present invention to provide a smart trash receptacle, which solve the issue that conventional smart trash receptacles are incapable of automatically trash bagging in a simple and reliable way, or are only capable of semi-automatic trash bagging, with insufficient bag sealing, insecure sealing and low loading capacity.

The present invention provides a smart trash receptacle for trash bags comprising a bagging mechanism disposed within a body of the trash receptacle. A first fixed edge of the bagging mechanism and a second fixed edge of the bagging mechanism intersecting the first fixed edge are provided at tops of internal surfaces of the body of the trash receptacle. The bagging mechanism comprises a first pressing bar, which is able to slide along the second fixed edge to gather the open end of the trash bag onto the first fixed edge, and a second pressing bar, which is able to slide along the first fixed edge to gather the open end of the trash bag onto the second fixed edge. The first pressing bar and the second pressing bar are further able to work together to gather the trash bag to the intersection of the first fixed edge and the second fixed edge, in the vicinity of which, a heat fusing device is disposed for sealing the trash bag. The bagging mechanism further comprises driving means for driving the first pressing bar and the second pressing bar to move.

Preferably, the intersection of the first fixed edge and the second fixed edge may be implemented as an arcuate chamfer.

Preferably, a first fixed bar of the bagging mechanism Z and a second fixed bar of the bagging mechanism intersecting the first fixed bar may be fixedly arranged at the tops of internal surfaces of the body of the trash receptacle, with a lateral edge of the first fixed bar forming the second fixed edge, and a lateral edge of the second fixed bar forming the first fixed edge.

Preferably, the body of the trash receptacle may comprise a receptacle section and a main cover section residing on the receptacle section, wherein the first pressing bar, the second pressing bar, the first fixed bar, the second fixed bar, the driving means and the heat fusing device are all disposed within the main cover section.

Preferably, the second pressing bar may be disposed parallel to the first fixed bar and the first pressing bar to the second fixed bar, wherein guide means are provided respectively between the first pressing bar and the first fixed bar, between the first pressing bar and the second pressing bar, between the second pressing bar and the second fixed bar and between the second pressing bar and the first pressing bar, and wherein under the guidance of those guide means, the first pressing bar and the second pressing bar are able to gather the open end of the trash bag to the intersection of the first fixed edge and the second fixed edge.

Preferably, the first pressing bar may define a guide slot, which extends axially with respect thereto, and through which one end of the second pressing bar is inserted, wherein the first pressing bar further defines, at one end, a first guide hole for the passage of the first fixed bar therethrough; the first pressing bar is able to reciprocate axially with respect to the first fixed bar and the second pressing bar; the second pressing bar further defines, at one end, a second guide hole for the passage of the second fixed bar therethrough; and the second pressing bar is able to reciprocate axially with respect to the second fixed bar and the first pressing bar.

Preferably, a base plate may be further provided, which is an elastic flexible material arranged on a lateral side of the second pressing bar corresponding to the heat fusing device.

Preferably, the driving means may comprise a motor, a gear assembly and a synchronous belt assembly, the motor being drivingly connected to the gear assembly, the gear assembly being engagingly connected to the synchronous belt assembly, wherein the first pressing bar and the second pressing bar are fastened to the synchronous belt assembly.

Preferably, the driving means may be a linear motor drivingly connected to the first pressing bar and the second pressing bar.

Preferably, the driving means may comprise a motor, a gear assembly and a level screw assembly, the motor being drivingly connected to the gear assembly, the gear assembly being engagingly connected to the level screw assembly, wherein the first pressing bar and the second pressing bar are connected to the level screw assembly by revolute pairs.

According to a preferred technical scheme of the invention, the heat fusing device for a smart trash receptacle, comprising:
a heating wire for fusion-cutting and thermally sealing an open end of a trash bag, the heating wire being connected to a heat-fusing circuit;
a base having heat-resistant and insulating properties, the base having a first end surface on which the heating wire is arranged;
a sensor for sensing a temperature of the heating wire; and
a control mechanism, wherein each of the sensor and the heat-fusing circuit is communicatively coupled to the control mechanism, the control mechanism is configured to control the heat-fusing circuit, and the control mechanism is configured to control the temperature of the heating wire based on a value sensed by the sensor.

Preferably, the heat fusing device further comprises a support plate having heat-resistant and insulating properties disposed between the base and the heating wire, the support plate having a flat surface on which the heating wire is supported.

The support plate is defined to have heat-resistant and insulating properties, so the base may be formed from non heat-resistant or non insulating material. It is useful for reducing the overall production cost of the hot melting device. Preferably, the support plate is a ceramic plate.

Preferably, the base may be provided, on its first end surface, with at least one set of stop blocks corresponding to at least one set of notches formed in edges of the support plate, each of the notches penetrating through the support plate in a thickness-wise direction thereof, wherein the distances between the stop blocks go with the distances between the notches, and wherein the first end surface of the base is bonded to the support plate with an adhesive tape.

Preferably, a second end surface of the base, which opposes the first end surface thereof, may define a cable groove in which the cable harness is received.

According to another preferred technical scheme of the invention, the heat fusing device for the smart trash receptacle, comprising:
a heating wire for fusion-cutting and thermally sealing an open end of a trash bag, the heating wire being connected to a heat-fusing circuit;
a base having heat-resistant and insulating properties, the base having a first end surface on which the heating wire is arranged; and
a control mechanism communicatively coupled to the heat-fusing circuit for control thereof.

Specifically, the control mechanism is defined to set the heating power of the heating wire by program so as to control the temperature of the heating wire.

According to any one of the above preferred technical scheme, the heating wire may have bent portions at both ends, which are inserted through respective corresponding through-holes or slots in the base and connected to the heat-fusing circuit by a cable harness.

Preferably, the bent portions of the heating wire may be connected to the cable harness by means of cold-crimp terminals.

Preferably, the base may have a first end surface on which the heating wire is arranged and a second end surface opposing the first end surface. The second end surface may define a cable groove in which the cable harness is received.

With the smart trash receptacle comprising the bagging mechanism for trash bags provided in the present invention, the driving device drives the first pressure bar and the second pressure bar to move, as a result, the open end of the trash bag is fixed at the intersection of the first fixed edge and the second fixed edge, and then the open end of the trash bag is sealed through the heat fusing device located at the intersection. By this way, problems of conventional smart trash receptacles are incapable of automatically trash bagging in a simple and reliable way, or are only capable of semi-automatic trash bagging, with insufficient bag sealing, insecure sealing and low loading capacity are solved.

With the smart trash receptacle of the present invention, problems of conventional smart trash receptacles are incapable of automatically trash bagging in a simple and reliable way, or are only capable of semi-automatic trash bagging, with insufficient bag sealing, insecure sealing and low loading capacity are solved.

It is to be understood that both the foregoing general description and the following detailed description are exemplary and explanatory only and are not restrictive of the present application.

### BRIEF DESCRIPTION OF THE DRAWINGS

Fig. 1 is a structural schematic illustrating the position of a bagging mechanism for trash bags in a body of a trash receptacle body according to Example 1 of the present invention.
Fig. 2 is a structural schematic of a bagging mechanism for trash bags according to Example 1 of the present invention.
Fig. 3 is a schematic exploded view of a heat fusing device according to Example 1 of the present invention.
Fig. 4 shows a front axial side of a base of a heat fusing device according to Example 1 of the present invention.
Fig. 5 shows a rear axial side of a base of a heat fusing device according to Example 1 of the present invention.
Fig. 6 is a structural schematic illustrating how a heat fusing device is controlled according to Example 1of the present invention.
Fig. 7 is a flow chart of hot melt temperature control of a smart trash receptacle according to Example 1 of the present invention.
Fig. 8 is a schematic exploded view of a heat fusing device according to Example 2 of the present invention.
Fig. 9 shows a front axial side of a base of a heat fusing device according to Example 2 of the present invention.
Fig.10 shows a rear axial side of a base of a heat fusing device according to Example 2 of the present invention.
Fig. 11 is a structural schematic illustrating how a heat fusing device is controlled according to Example 2 of the present invention.
Fig. 12 is a flow chart of hot melt temperature control of a smart trash receptacle according to Example 2 of the present invention.

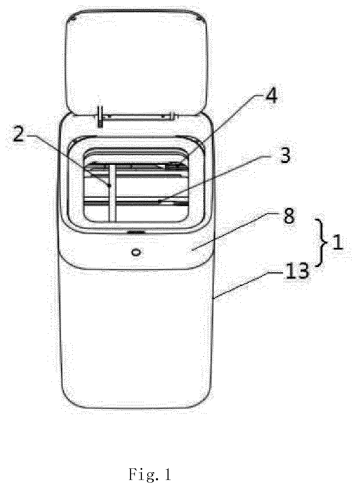

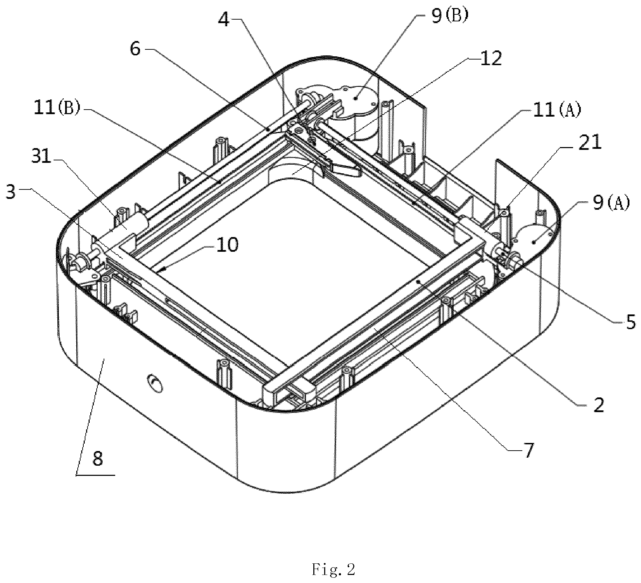

In Figs. 1 to 12,
1 denotes a body of a trash receptacle; 2, a first pressing bar; 3, a second pressing bar; 4, a heat fusing device; 5, a first fixed bar; 6, a second fixed bar; 7, a guide slot; 8, a main cover section; 9, driving means; 9-(A), a first motor/gearbox assembly; 9-(B), a second motor/gearbox assembly; 10, a base plate; 11, a synchronous belt assembly; 11-(A), a first synchronous belt; 11-(B), a second synchronous belt;12, an arcuate chamfer; 13, a receptacle section; 41, a base; 42, an adhesive tape; 43, a support plate; 44, a heating wire; 45, a cold-crimp terminal; 46, a cable harness; 47, a stop block; 48, a notch on the support plate; 411, a first end surface of the base; 412, a second end surface of the base; 413, a through-hole on the base; 414, a cable groove; 415, a notch on the base; 441, a heat fusing portion of the heating wire; 442, a bent portion of the heating wire; 431, a hole on the support plate; and 21(31), a guide sleeve.

### DETAILED DESCRIPTION

Particular examples disclosed herein provide a smart trash receptacle and a bagging mechanism for trash bags, which solves the issue that the conventional smart trash receptacles do not have an automatic bagging mechanism or are only capable of semi-automatic trash bagging, with insufficient bag sealing, insecure sealing and low loading capacity.

The examples will be described below with reference to the accompanying drawings. In addition, the examples set forth below do not limit the invention as defined by the appended claims in any sense. Further, none of the features described in the following examples are considered necessarily essential to the subject matter of the claims attached.

### Example 1

Reference is made to Figs. 1 to 2, a bagging mechanism for trash bags for a smart trash receptacle provided in an example that is used to automatically gather and seal an open end of a trash bag full with trash and is disposed within a body of the trash receptacle 1. A first fixed edge and a second fixed edge are provided at tops of internal surfaces of the body of the trash receptacle 1. The first fixed edge intersects the second fixed edge. Further, it may be configured that the first and second fixed edges are perpendicular to each other.

The bagging mechanism includes: a first pressing bar 2, which is able to slide along the second fixed edge to gather the open end of the trash bag onto the first fixed edge; and a second pressing bar 3, which is able to slide along the first fixed edge to gather the open end of the trash bag onto the second fixed edge. In addition, the first pressing bar 2 and the second pressing bar 3 are further able to work together to gather the trash bag to the intersection of the first fixed edge and the second fixed edge. In the vicinity of the intersection, a heat fusing device 4 is disposed for sealing the open end of the trash bag. As a result, the open end of the trash bag can be gathered up at one point, making it easier to be sealed. Moreover, during the heat fusing and sealing by the heat fusing device 4, it is less possible for thermal damage to the bag body and leakage of trash.

Further, it also includes driving means 9 for driving the first pressing bar 2 and the second pressing bar 3 to automatically gather the open end of the trash bag without human intervention, promoting convenience in our lives.

With the above arrangement, the issue that the conventional smart trash receptacles are incapable of automatically trash bagging in a simple and reliable way, or are only capable of semi-automatic trash bagging, with insufficient bag sealing, insecure sealing and low loading capacity are solved.

In a preferred implementation of this example, in order to gather the open end of the trash bag in a more concentrated and faster manner, the intersection of the first fixed edge and the second fixed edge may be implemented as an arcuate chamfer 12. In addition, a base plate 10 may be provided, which may be implemented as an elastic flexible material arranged on a lateral side of the second pressing bar 3 corresponding to the heat fusing device 4. As such, the first pressing bar 2 and the second pressing bar 3 can gather the open end of the trash bag between the base plate 10 and the heat fusing device 4, thus providing a buffer for the gathering of the trash bag and ensuring denser gathering.

Specifically, the base plate 10 may be composed of the elastic flexible material and a Teflon tape bonded to the surface thereof. Using this tape allows convenient and fast attachment to the lateral side of the second pressing bar 3. The base plate 10 may also be embedded in the side groove of the second pressure bar 3 through interference fit, so that to make the second pressing bar 3 look much more concise and beautiful, and the connection between the second pressing bar 3 and the base plate 10 is more firm and the disassembly and assembly is more convenient.

In this example, the body of the trash receptacle 1 may include a receptacle section 13, and a main cover section 8 residing on the receptacle section 13. The first pressing bar 2, the second pressing bar 3, a first fixed bar 5, a second fixed bar 6, the driving means 9 and the heat fusing device 4 may be all housed within the main cover section 8. Preferably, the first fixed bar 5, the second fixed bar 6, the first pressing bar 2 and the second pressing bar 3 may be disposed on respective four side walls of the main cover section 8 of the trash receptacle.

It should be noted that the first fixed bar 5 and the second fixed bar 6 perpendicular to the first fixed bar 5 may be fixedly disposed in the main cover section 8, with a lateral edge of the first fixed bar 5 forming the second fixed edge and a lateral edge of the second fixed bar 6 forming the first fixed edge. The second pressing bar 3 may be disposed parallel to the first fixed bar 5, and the first pressing bar 2 to the second fixed bar 6. Guide means may be provided respectively between the first pressing bar 2 and the first fixed bar 5, between the first pressing bar 2 and the second pressing bar 3, between the second pressing bar 3 and the second fixed bar 6 and between the second pressing bar 3 and the first pressing bar 2. Under the guidance of such guide means, the first pressing bar 2 and the second pressing bar 3 can gather the open end of the trash bag to the intersection of the first fixed edge and the second fixed edge.

The first pressing bar 2 may first transversely gather the open end of the trash bag under the guidance of the guide means, and the second pressing bar 3 may then longitudinally gather it under the guidance of the guide means. In this way, the issue that the conventional smart trash receptacles do not have an automatic bagging mechanism or are only capable of semi-automatic trash bagging, with insufficient bag sealing, insecure sealing and low loading capacity can be solved.

In one implementation, the first pressing bar 2 may define a guide slot 7, which extends axially with respect thereto, and through which one end of the second pressing bar 3 is inserted. The first pressing bar 2 may further define, at one end, a first guide hole for the passage of the first fixed bar 5 therethrough. The first pressing bar 2 is able to reciprocate axially with respect to the first fixed bar 5 and the second pressing bar 3. The second pressing bar 3 may further define, at one end, a second guide hole for the passage of the second fixed bar 6 therethrough, and the second pressing bar 3 is able to reciprocate axially with respect to the second fixed bar 6 and the first pressing bar 2.

It should be noted that, in order to facilitate the processing, a guide sleeve 21 with a central hole may be fixedly provided at one end of the first pressing bar 2, and the central hole of the guide sleeve 21 forms the first guide hole. Similarly, a guide sleeve 31 with a central hole may also be fixedly provided at one end of the second pressing bar 3, and the central hole of the guide sleeve 31 forms the second guide hole.

Preferably, in order to prevent the second pressing bar 3 from sliding out of the guide slot 7, the guide slot 7 may be closed at the ends.

According to the example, the driving means 9 may take various concrete forms, such as:
In one implementation, the driving means 9 may include a motor, a gear assembly and a synchronous belt assembly 11. The motor may be drivingly connected to the gear assembly so as to be able to drive the latter to rotate. The gear assembly may be engagingly connected to the synchronous belt assembly 11, and the first pressing bar 2 and the second pressing bar 3 may be both fastened to the synchronous belt assembly 11. As such, the synchronous belt assembly 11 can drive the first pressing bar 2 and the second pressing bar 3 to move. The synchronous belt assembly 11 may include a first synchronous belt 11-(A) for driving the first pressing bar 2 to move and a second synchronous belt 11-(B) for driving the second pressing bar 3 to move. For sake of convenience and spacing saving, the motor may be combined with gearbox assemblies to form motor/gearbox assemblies, including a first motor/gearbox assembly 9-(A) for driving the first pressing bar 2 and second a motor/gearbox assembly 9-(B) for driving the second pressing bar 3. At first, the first motor/gearbox assembly 9-(A) may drive the first synchronous belt 11-(A) to move the first pressing bar 2, with the first pressing bar 2 being fixed to the first synchronous belt 11-(A) and the first fixed bar 5 being inserted through the first guide hole. The first guide hole may play a role in guidance, and the first fixed bar 5 may be fixed within the main cover section 8 of the trash receptacle. The first pressing bar 2 may translate axially with respect to the first fixed bar 5 to transversely gather the trash bag. After that, the second motor/gearbox assembly 9-(B) may drive the second synchronous belt 11-(B) to move the second pressing bar 3, with the second pressing bar 3 being fixed to the second synchronous belt 11-(B) and the second fixed bar 6 being inserted through the guide slot 7. The guide slot 7 may play a role in guidance, and the second fixed bar 6 may also be fixed within the main cover section 8 of the trash receptacle and disposed perpendicular to the first fixed bar 5. The second pressing bar 3 may translate axially with respect to the second fixed bar 6 to longitudinally gather the open end of the trash bag. Meanwhile, in order to prevent the trash bag from being strongly pulled, buffer actions may be added to the gathering by the first pressing bar 2 and the second pressing bar 3. After the series of actions are performed, an automatic bagging process is completed.

In a second implementation, the driving means 9 may be a linear motor for directly driving the first pressing bar 2 and the second pressing bar 3 to move.

In a third implementation, the driving means 9 may include a motor, a gear assembly and a level screw assembly, wherein the first pressing bar 2 and the second pressing bar 3 may be connected to the level screw assembly by revolute pairs.

Of course, other driving means capable of driving the first pressing bar 2 and the second pressing bar 3 to move are also possible, depending on actual circumstances.

It should be noted that there may either be provided two independent driving means 9 or only one driving means 9. The first pressing bar 2 and the second pressing bar 3 are both connected to the driving means 9 and successively and independently moved under the action of the driving means 9. However, the movement is not limited to successive movement and may also be simultaneous movement.

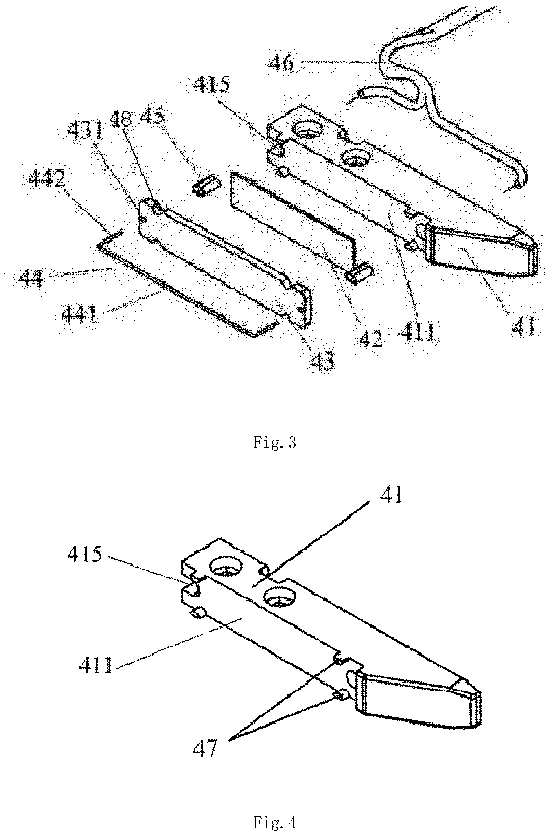

Referring to Figs. 3 to 7, in this example, the heat fusing device 4 may include a base 41, a support plate 43 and a heating wire 44. As shown in Fig. 3, the base 41 may be fixed to the body of the trash receptacle 1 and provide accommodation for the support plate 43. The heating wire 44 may be configured for fusion-cutting and thermally sealing an open end of the trash bag and connected to a heat-fusing circuit. Under the action of the heat-fusing circuit, the temperature of the heating wire 44 can be raised to a melting point of the trash bag so that the latter can be fusion-cut and sealed. Moreover, the support plate 43 may be disposed and fixed between the base 41 and the heating wire 44 and may have a flat surface on which the heating wire 44 is supported, so that the heating wire 44 is disposed on the side of the support plate 43 where the flat surface is present.

The support plate 43 is defined to have heat-resistant and insulating properties, so the base 41 may be formed from non heat-resistant or non insulating material. It is useful for reducing the overall production cost of the hot melting device.

In this example, the support plate 43 is preferably a ceramic plate 43 having a flat surface on which the heating wire 44 is supported so that the heating wire 44 is disposed on the side of the ceramic plate where the flat surface is present. Since the ceramic plate has the properties of high temperature resistance, corrosion resistance, a long service life and good surface smoothness, when the heating wire 44 comes into contact with the trash bag for its heat fusion, the trash bag will rarely adhere to the heat fusing device, thus ensuring its good performance.

It should be noted that the flat surface of the ceramic plate may be a smooth ceramic surface which is dense in texture and not permeable so that dust or dirt cannot easily adhere thereto. Additionally, the ceramic surface can be conveniently cleaned with a solvent, without suffering from any effect on the material properties. Moreover, as the ceramic plate has good electrical and thermal insulation properties, it can prevent the base 41 from experiencing deformation or damage at a high temperature of the heating wire 44 and helps in avoiding current leakage in the device.

In doing so, during an automatic bagging process performed by the smart trash receptacle, the heat fusing device 4 is not only capable of ensuring good contact between the heating wire 44 and the trash bag, but can also prevent adhesion of the trash bag, thus addressing the issues of easy damage to the trash bag and accumulation of dirt in the heat fusing device 4, improving automatic bagging quality and enhancing the stability and reliability of the smart trash receptacle.

Of course, the ceramic plate can also be replaced by other supporting plates with heat-resistant and insulating characteristics. For example, an insulating board composed of materials (e.g: mica, glass fiber, asbestos or their compositions) which are bonded or impregnated or coating with suitable resins (e.g: organic silicon resins).

In this example, the heating wire 44 may have bent portions 442 at both ends, and the support plate 43 may define through-holes 431 in the flat surface, It will be readily appreciated that slots may be defined instead of the through-holes 431. The through-holes or slots 431 may correspond to the respective bent portions 442 so that the bent portions 442 can be inserted through the through-holes or slots 431 to be fixedly connected to the heat-fusing circuit by a cable harness 46. In other words, the heating wire 44 has a heat fusing portion 441 and bent portions 442. The bent portions 442 are connected to the heat-fusing circuit, while the heat fusing portion 441 is configured to be brought into contact with the trash bag to fusion-cut and seal it. As such, since the bent portions 442 of the heating wire 44 are inserted through the through-holes or slots 431 and fixed to the base 41, the connection of the heating wire 44 is firm. Moreover, as the heat fusing portion 441 of the heating wire 44 entirely rests on the flat surface of the support plate 43, adhesion of the trash bag can be effectively prevented.

Further, the bent portions 442 of the heating wire 44 may be fixed to the base 41 by means of cold-crimp terminal 45,
Wherein, each of the cold-crimp terminals 45 may have an opening allowing the passage of a wire therethrough. During use, the bent portions 442 and the cable harness 46 are inserted into the openings, and an adjusting member is then manipulated to narrow the openings, so that the bent portions 442, the cable harness 46 are fastened to the base 41 together with the cold-crimp terminals 45. As the cold-crimp terminals 45 are simple in structure, easy to use and inexpensive, they can help in saving labor for assembly and manufacturing cost.

Wherein, the base 41 may define notches 415 in which the cold-crimp terminal 45 can be snugly received. Moreover, when the cold-crimp terminals 45 are received in the notches 415, the cold-crimp terminal 45 may experience inner-diametrical reductions, thereby locking the bent portions therein. As such, the cold-crimp terminal45 and the notches constitute space-saving fasteners for the heating wire 44 with improved smoothness and few burrs that may scratch the trash bag.

In some implementations, the base 41 may have a first end surface 411 in contact with the support plate 43 and a second end surface 412 opposing the first end surface. An adhesive tape 42 may be provided between the first end surface 411 and the support plate 43 to bond them together. As such, the attachment of the support plate 43 to the base 41 can be accomplished with a simple structure by easy operations. This can save time and labor and helps in improving operational efficiency. It is to be understood that, referring to Figs. 3 to 4, the notches 415 is a concrete form of slot.

In some implementations, the base 41 may have a first end surface 411 in contact with the support plate 43 and a second end surface 412 opposing the first end surface 411. An adhesive tape 42 may be provided between the first end surface 411 and the support plate 43 to bond them together. As such, the attachment of the support plate 43 to the base 41 can be accomplished with a simple structure by easy operations. It can save time and labor and help in improving operational efficiency.

Further, as the same to example 1, the base 41 has the first end surface 411 and a second end surface 412 opposing the first end surface 411. That is, the first end surface 411 and the second end surface 412 are on opposing sides of the base 41. The second end surface 412 of the base 41 defines a cable groove 414 in which the cable harness 46 is received. Hiding the cable harness 46 in the cable groove 414 can provide protection to the circuit, facilitate the assembly of the heat fusing device and enable component modularization.

In order for more stable connection between the support plate 43 and the base 41 to be achieved, at least one set of stop blocks 47 may be provided on the first end surface 411 of the base 41, and accordingly, at least one set of notches 48 may be formed in edges of the support plate 43. Each set of stop blocks 47 may be in one-to-one correspondence with a respective set of notches 48 so that the distances between the stop blocks 47 go with the distances between the notches. Each of the notches 48 may penetrate through the support plate 43 in a thickness-wise direction thereof. Here, the "thickness-wise direction" refers to a direction pointing from one flat surface of the ceramic plate 43 to the other flat surface thereof. In this way, in order to fasten the ceramic plate 43 to the base 41, each set of stop blocks 47 may be snapped in a corresponding set of notches 48, making the attachment of the ceramic plate 43 to the first end surface 411 of the base 41 more snug and firm. Preferably, two sets of stop blocks 47 and two sets of notches 48, i.e., four snap-on fasteners, may be provided to further increase the stability in the attachment of the ceramic plate 43.

Further, the heat fusing device 4 may include a control mechanism and a sensor. The sensor is configured to sense the temperature of the heating wire 44, and each of the sensor and the heat-fusing circuit is communicatively coupled to the control mechanism. During a heat fusion process, the control mechanism is adapted to control the temperature of the heating wire 44 based on a value sensed by the sensor so as to ensure that the heating wire 44 will always be able to fusion-cutting and thermally sealing the trash bag. This is favorable to automatic temperature adjustment for the heating wire 44, ensures good automatic bagging quality and improves the utility and reliability of the smart trash receptacle. The sensor may be fixed on the base 41 through a screw for example, and directly contacted with the heating wire 44 to sense the temperature of the heating wire 44 more quickly and accurately.

The sensor is preferred to be a temperature sensor either in direct contact with the heating wire 44 or in indirect contact therewith via a thermally-conductive member.

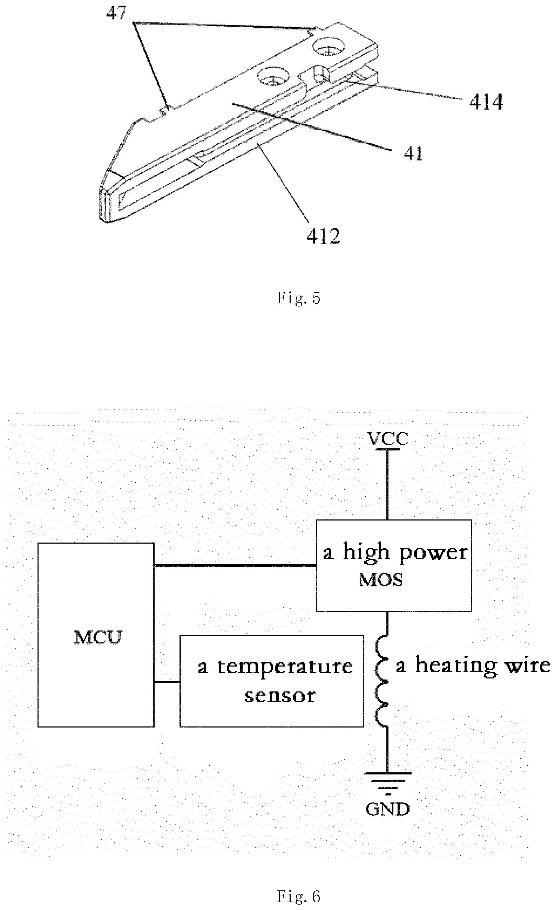

In some preferred implementations, the control mechanism includes a microcontroller unit (MCU) which, as shown in Fig. 6, is communicatively coupled to both the temperature sensor and a high power MOS device and adapted to adjust an output power level of the high power MOS device based on the sensed value of the temperature sensor, thus enabling the control over the heating wire 44. The MOS device is also known as a MOS transistor or a metal-oxide-semiconductor field-effect transistor (MOSFET).

In this particular example, there is also provided a method for controlling a heat fusing temperature for the smart trash receptacle as defined above. The method includes:
collecting an actual temperature value of the heating wire;
comparing the actual temperature value with a predetermined temperature value;
if the actual temperature value is higher than the predetermined temperature value, performing a control process to lower the temperature of the heating wire; and
if the actual temperature value is lower than the predetermined temperature value, performing a control process to raise the temperature of the heating wire.

In some implementations, based on the difference between the actual temperature of the heating wire and the predetermined temperature value, a control amount of the heating power of the heating wire 44 may be calculated using either of two algorithms, i.e. proportional-integral-derivative (PID), proportional-derivative (PD), also known as two approaches for adjusting for adjusting the temperature of the heating wire. PID and PD are two common algorithms to those skilled in the art.

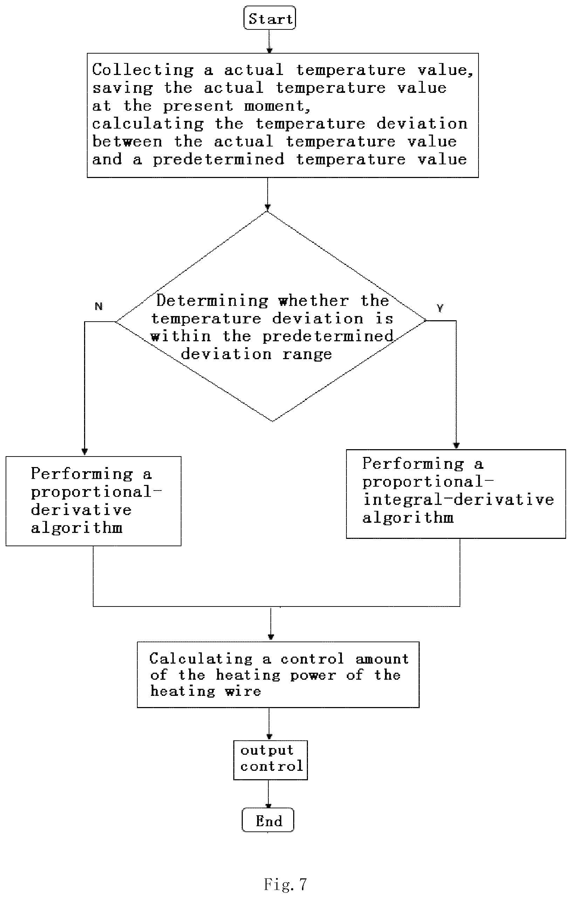

Preferably, as shown in the figure7, the method further includes:
calculating a deviation of the actual temperature from the predetermined temperature value;
comparing the deviation with a predetermined deviation range;
if the deviation is within the predetermined deviation range, calculating the control amount of the heating power of the heating wire 44 using a proportional-integral-derivative (PID) algorithm;
if the deviation is beyond the predetermined deviation range, calculating the control amount of the heating power of the heating wire 44 using a proportional-derivative (PD) algorithm; and
adjusting the temperature of the heating wire (44) based on the control amount of the heating power of the heating wire 44.

It should be noted that there may be significant hysteresis in both the collection and control of the heating wire's temperature. For this reason, a table of control rules may be implemented in the control program to carry out the PID or PD algorithm depending on the temperature of the heating wire, its fluctuation profile, output amplitude and other parameters and perform control for the heating power level of the heating wire based on the PID or PD algorithm. In this way, the temperature of the heating wire may be efficiently controlled within a suitable range in real time at low cost, facilitating the accomplishment of both fusion-cutting and sealing of the trash bag within a single action.

In some preferred implementations, a predetermined temperature of the heating wire may be 320 degrees, compared to the melting point of the trash bag ranging from 130 degrees to 400 degrees. Therefore, this predetermined temperature is conducive to simultaneous fusion-cutting and sealing of the trash bag.

In this example, there is also provided a smart trash receptacle incorporating the bagging mechanism for trash bags as defined in example 1. In doing so, the problems of proneness to thermal damage at the sealed portion due to a small material thickness there arising from the unidirectional gathering method adopted in automatic bagging mechanisms of conventional smart trash receptacles can be solved. Since the smart trash receptacle offers the substantially same beneficial effects as the above-described bagging mechanism, it will not be described in further detail herein for the sake of simplicity.

### Example 2

The bagging mechanism in example 2 is similar to that of example 1 with the difference being the heat fusing device 4.

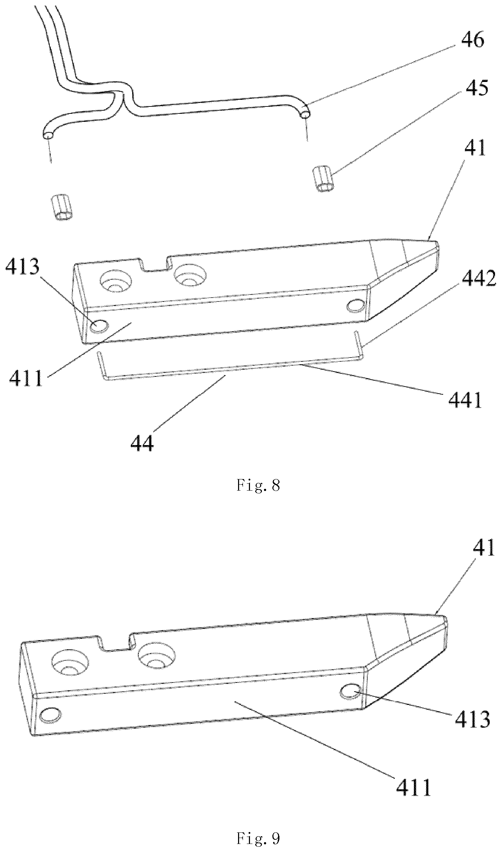

Reference is now made to Figs. 8 to 12, a heat fusing device for a smart trash receptacle according to example 2 of the present invention is shown. With similarity to Example 1, the heat fusing device 4 may also include a base 41, and a heating wire 44. The base 41 may be fixed to the body of the trash receptacle 1 and provide accommodation for the heating wire 44. The heating wire 44 may be configured for fusion-cutting and thermally sealing an open end of the trash bag and connected to a heat-fusing circuit. Under the action of the heat-fusing circuit, the temperature of the heating wire 44 can be raised to a melting point of the trash bag so that the latter can be fusion-cut and sealed. Moreover, the base 41 has heat-resistant and insulating properties, so the base can be prevented from experiencing deformation or damage at a high temperature of the heating wire, thus helping in avoiding current leakage in the device.

It will be appreciated that the smart trash receptacle may have a movable base plate which can slowly approach and abut against the heating wire 44. During the approach of the base plate, the trash bag will be thermo-plastically sealed gradually by heat from the heating wire 44. Upon the base plate abutting against the heating wire 44, the thermo-plastically sealed trash bag is fusion-cut by the heating wire 44.

In this way, both thermoplastic sealing and thermal fusion-cutting can be accomplished within a single action, thus simplifying the heat fusing structure and reducing its footprint. As a result, during an automatic bagging process performed by the smart trash receptacle, the heat fusing device is capable of fulfilling two tasks, i.e., thermoplastic sealing and thermal fusion-cutting, within a single action. This allows structural simplicity and reliability, solves the problem that the existing trash receptacles of various types do not have effective means for automatic bagging and sealing, improves automatic bagging quality and increases the degree of intelligence of the smart trash receptacle. Further, the base 41 can be prevented from experiencing deformation or damage at a high temperature of the heating wire, thus helping in avoiding current leakage in the device.

In this example, the base 41 is preferably made of ceramic material. As such, the base 41 may have a smooth ceramic surface which is dense in texture and not permeable so that dust or dirt will not easily adhere thereto. Additionally, the ceramic surface can be conveniently cleaned with a solvent, without suffering from any adverse effect on the material properties. Moreover, as the ceramic material has good electrical and thermal insulation properties, the base 41 will not be deformed or damaged at a high temperature of the heating wire 44 and helps in preventing current leakage in the device. Further, it can avoid adhesion of, and hence damage to, the trash bag and accumulation of dirt in the heat fusing device, leading to improved automatic bagging quality and enhanced stability and reliability of the smart trash receptacle. Of course, the material of the base 41 is not limited to the ceramic material and may also be another heat-resistant insulating material or another material that has undergone heat resistance and insulation treatments.

Further, an anti-adhesion coating may be provided on the first end surface 411 of the base 41. As such, upon the heating wire 44 coming into contact with the trash bag for heat fusion, the trash bag will barely adhere to the heat fusing device, thus ensuring its good performance.

In this example, the heating wire 44 may have bent portions 442 at both ends, and the base 41 may define through-holes 413 corresponding to the respective bent portions 442. It will be readily appreciated that slots may be defined instead of the through-holes 413. The bent portions 442 can be inserted through the through-holes or slots 413 and connected to the heat-fusing circuit by a cable harness 46. In other words, the heating wire 44 has a heat fusing portion 441 and bent portions 442. The bent portions 442 are connected to the heat-fusing circuit, while the heat fusing portion 441 is configured to be brought into contact with the trash bag to fusion-cut and seal it. As such, since the bent portions 442 of the heating wire 44 are inserted through the through-holes or slots 413 and connected by the cable harness 46, the connection of the heating wire 44 is firm. Moreover, as the heat fusing portion 441 of the heating wire 44 entirely rests on the anti-adhesion coating of the base 41, adhesion of the trash bag can be effectively prevented.

Further, the bent portions 442 of the heating wire 44 may be fastened to the base 41 by means of cold-crimp terminals 45.

Wherein, each of the cold-crimp terminals 45 may have an opening allowing the passage of a wire therethrough. During use, the bent portions 442 and the cable harness 46 are inserted into the openings, and an adjusting member is then manipulated to narrow the openings, so that the bent portions 442, the cable harness 46 are fastened to the base 41 together with the cold-crimp terminals 45. A through-hole 413 is arranged on the base 41 for the cold-crimp terminals 45 to be embedded and limited, so as to fix the cold-crimp terminals 45 together with the heating wire 44 on the base 41. As the cold-crimp terminals 45 are simple in structure, easy to use and inexpensive, they can help in saving labor for assembly and manufacturing cost.

The heat fusing device 4 may further include a control mechanism communicatively coupled to the heat-fusing circuit for control thereof. The heat-fusing circuit is connected with the heating wire 44 by cable harness 46.The control mechanism may control the heat-fusing circuit based on program settings and timing outputs of a timer, thereby controlling heating power of the heating wire 44 to such a level that ensures the trash bag to be always heat-fused by the heating wire 44. This allows the temperature of the heating wire 44 to be easily adjusted, ensures good automatic bagging quality, improves the utility and reliability of the smart trash receptacle and leads to a further reduction in bagging and assembly costs.

Further, as the same to example 1, the base 41 has the first end surface 411 and a second end surface 412 opposing the first end surface 411. That is, the first end surface 411 and the second end surface 412 are on opposing sides of the base 41. The second end surface 412 of the base 41 defines a cable groove 414 in which the cable harness 46 is received. Hiding the cable harness 46 in the cable groove 414 can provide protection to the circuit, facilitate the assembly of the heat fusing device and enable component modularization.

During an automatic bagging process of the smart trash receptacle, the heat fusing device is not only capable of ensuring good contact between the heating wire 44 and the trash bag, but can also prevent adhesion of the trash bag, thus addressing the issues of easy damage to the trash bag and accumulation of dirt in the heat fusing device, improving automatic bagging quality and enhancing the stability and reliability of the smart trash receptacle.

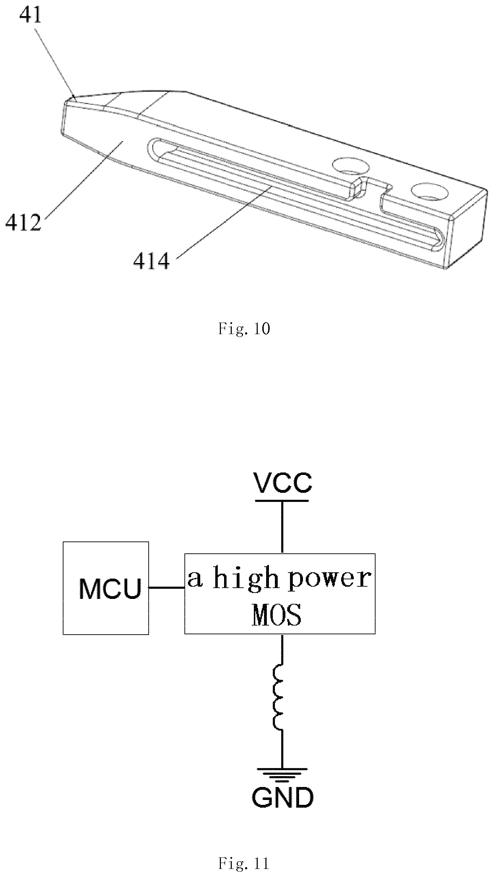

As the same to example 1, in some preferred implementations, the control module includes a microcontroller unit (MCU) which, as shown in Fig. 11, is communicatively coupled to a high power MOS device and adapted to adjust an output power level thereof based on program settings and timing values of a timer, thus enabling the control over the heating wire 44. The MOS device is also known as a MOS transistor or a metal-oxide-semiconductor field-effect transistor (MOSFET).

In this particular example, there is also provided a method for controlling a heat fusing temperature for the smart trash receptacle as defined above. The method includes:
controlling the heat-fusing circuit to output power at a first predetermined power level;
obtaining a time duration for which the heat-fusing circuit outputs power at the first predetermined power level;
determining whether the time duration is within a predetermined time duration range; and
if not, controlling the heat-fusing circuit to output power at a second predetermined power level;

The method may further include, before the heat-fusing circuit is controlled to output power at the first predetermined power level:
detecting how much an open end of a trash bag is gathered; and
if the open end of the trash bag has been gathered, controlling the heat-fusing circuit to output power at the first predetermined power level.

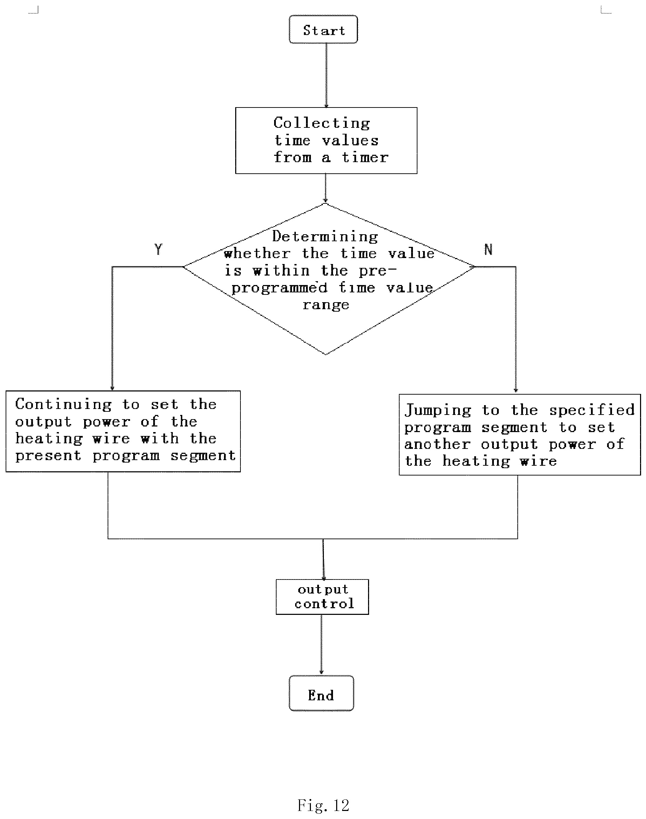

In order for the method to be implementable, the control mechanism may have a timer or timing program for time sampling, a comparator for comparing time values with pre-programmed time value, the first predetermined power level, the second predetermined power value and the predetermined time duration rang. The flow chart of hot melt temperature control of a smart trash receptacle is shown in Fig. 12.

It should be noted that, affected both by heating power and heat dissipation, the temperature of the heating wire 44 will reach a certain equilibrium. Therefore, on the basis of extensive experiments and validations, a temperature equilibrium curve for the heating wire 44 may be plotted as a function of heating power and heating time duration. Additionally, a table of control rules may be stored on the control mechanism, for section-wise heating power control for the heating wire 44 based on its heating power, heating time duration and other parameters. In this way, the temperature of the heating wire may be efficiently controlled within a suitable range in real time at low cost, facilitating the fusion-cutting and sealing of the trash bag. Moreover, the need for a temperature sensor can be dispensed with, helping in structural simplification and cost saving.

In some preferred implementations, a target value for temperature control of the heating wire may be 320 degrees, compared to the melting point of the trash bag ranging from 130 degrees to 400 degrees. Therefore, this preset temperature is conducive to the fusion-cutting and sealing of the trash bag.

In this example, there is also provided a smart trash receptacle incorporating the bagging mechanism for trash bags as defined example 2. In doing so, the problems of proneness to thermal damage at the sealed portion due to a small material thickness there arising from the unidirectional gathering method adopted in automatic bagging mechanisms of conventional smart trash receptacles can be solved. Since the smart trash receptacle offers the substantially same beneficial effects as the above-described bagging mechanism, it will not be described in further detail herein for the sake of simplicity.

It should be noted that the terms "first", "second", etc. as used herein are intended merely to distinguish between elements or functionalities rather than implying any particular sequence or order.

The foregoing description merely presents a few particular examples of the present invention and does not limit the scope thereof in any sense. Any and all variations or substitutions easily devisable by those familiar with the art in light of the teachings disclosed herein are considered to fall within the scope of the present invention. Accordingly, the scope of the invention shall be as defined in the appended claims.

## Claims

1. A smart trash receptacle comprising a bagging mechanism disposed within a body of the trash receptacle (1), wherein a first fixed edge of the bagging mechanism and a second fixed edge of the bagging mechanism intersecting the first fixed edge are provided at tops of internal surfaces of the body of the trash receptacle (1); the bagging mechanism comprises a first pressing bar (2), which is able to slide along the second fixed edge to gather the open end of the trash bag onto the first fixed edge, and a second pressing bar (3), which is able to slide along the first fixed edge to gather the open end of the trash bag onto the second fixed edge, the first pressing bar (2) and the second pressing bar (3) being further able to work together to gather the trash bag to the intersection of the first fixed edge and the second fixed edge, in the vicinity of which, a heat fusing device (4) is disposed for heat fusing and sealing the trash bag; and the bagging mechanism further comprises driving means (9) for driving the first pressing bar (2) and the second pressing bar (3) to move.

2. The smart trash receptacle of claim 1, wherein a first fixed bar (5) of the bagging mechanism and a second fixed bar (6) of the bagging mechanism intersecting the first fixed bar (5) are fixedly arranged at the tops of internal surfaces of the body of the trash receptacle (1), with a lateral edge of the first fixed bar (5) forming the second first fixed edge, and a lateral edge of the second fixed bar (6) forming the first fixed edge.

3. The smart trash receptacle of claim 2, wherein the body of the trash receptacle (1) comprises a receptacle section (13) and a main cover section (8) residing on the receptacle section (13); and the first pressing bar (2), the second pressing bar (3), the first fixed bar (5), the second fixed bar (6), the driving means (9) and the heat fusing device (4) are all disposed within the main cover section (8).

4. The smart trash receptacle of claim 3, wherein the second pressing bar (3) is disposed parallel to the first fixed bar (5) and the first pressing bar (2) to the second fixed bar (6), and wherein guide means are provided respectively between the first pressing bar (2) and the first fixed bar (5), between the first pressing bar (2) and the second pressing bar (3), between the second pressing bar (3) and the second fixed bar (6) and between the second pressing bar (3) and the first pressing bar (2), and under the guidance of those guide means, the first pressing bar (2) and the second pressing bar (3) are able to gather the open end of the trash bag to the intersection of the first fixed edge and the second fixed edge.

5. The smart trash receptacle of claim 4, wherein the first pressing bar (2) defines a guide slot (7), which extends axially with respect thereto, and through which one end of the second pressing bar (3) is inserted; the first pressing bar (2) further defines, at one end, a first guide hole for the passage of the first fixed bar (5) therethrough; the first pressing bar (2) is able to reciprocate axially with respect to the first fixed bar (5) and the second pressing bar (3), wherein the second pressing bar (3) further defines, at one end, a second guide hole for the passage of the second fixed bar (6) therethrough; and the second pressing bar (3) is able to reciprocate axially with respect to the second fixed bar (6) and the first pressing bar (2).

6. The smart trash receptacle of claim 1, wherein a base plate (10) is further provided, which is an elastic flexible material arranged on a lateral side of the second pressing bar (3) corresponding to the heat fusing device (4).

7. The smart trash receptacle of claim 1, wherein the driving means (9) comprise a motor, a gear assembly and a synchronous belt assembly (11), the motor being drivingly connected to the gear assembly, the gear assembly being engagingly connected to the synchronous belt assembly (11), and wherein the first pressing bar (2) and the second pressing bar (3) are fastened to the synchronous belt assembly (11).

8. The smart trash receptacle of claim 1, wherein the driving means (9) comprise a motor, a gear assembly and a level screw assembly, the motor being drivingly connected to the gear assembly, the gear assembly being engagingly connected to the level screw assembly, wherein the first pressing bar (2) and the second pressing bar (3) are connected to the level screw assembly by revolute pairs.

9. The smart trash receptacle of claim 1, wherein the heat fusing device (4) comprising:
a heating wire (44) for fusion-cutting and thermally sealing an open end of a trash bag (4), the heating wire (44) being connected to a heat-fusing circuit;
a base (41) having heat-resistant and insulating properties, the base (41) having a first end surface (411) on which the heating wire (44) is arranged;
a sensor for sensing a temperature of the heating wire; and
a control mechanism, wherein each of the sensor and the heat-fusing circuit is communicatively coupled to the control mechanism, the control mechanism is configured to control the heat-fusing circuit, and the control mechanism is configured to control the temperature of the heating wire based on a value sensed by the sensor.

10. The smart trash receptacle of claim 1, wherein the heat fusing device (4) further comprising a support plate (43) disposed between the base (41) and the heating wire (44), the support plate (43) having a flat surface on which the heating wire (44) is supported.

11. The smart trash receptacle of claim 1, wherein the heat fusing device (4) comprising:
a heating wire (44) for fusion-cutting and thermally sealing an open end of a trash bag, the heating wire (44) being connected to a heat-fusing circuit;
a base (41) having heat-resistant and insulating properties, the base (41) having a first end surface on which the heating wire (44) is arranged; and
a control mechanism communicatively coupled to the heat-fusing circuit for control thereof.

12. The smart trash receptacle of claim 9 or 11, wherein the heating wire (44) has bent portions (442) at both ends, which are inserted through respective corresponding through-holes or slots in the base (41) and connected to the heat-fusing circuit by a cable harness (46).

13. The smart trash receptacle of claim 12, wherein the bent portions (442) of the heating wire (44) are connected to the cable harness (46) by means of cold-crimp terminals (45).

14. The smart trash receptacle of claim 12, wherein a second end surface (412) of the base (41), which opposes the first end surface (411) thereof, defines a cable groove in which the cable harness (46) is received.

## Patentansprüche

1. Intelligenter Müllbehälter mit einem in einem Körper des Müllbehälters (1) angeordneten Absackmechanismus, wobei eine erste feste Kante des Absackmechanismus und eine zweite feste Kante des Absackmechanismus, die die erste feste Kante schneidet, an Oberseiten von Innenflächen des Körpers des Müllbehälters (1) vorgesehen sind; wobei der Absackmechanismus eine erste Druckstange (2) umfasst, die in der Lage ist, entlang der zweiten festen Kante zu gleiten, um das offene Ende des Müllbeutels auf der ersten festen Kante zu sammeln, und eine zweite Druckstange (3), die in der Lage ist, entlang der ersten festen Kante zu gleiten, um das offene Ende des Müllbeutels auf der zweiten festen Kante zu sammeln, wobei die erste Druckstange (2) und die zweite Druckstange (3) weiterhin in der Lage sind, zusammenzuarbeiten, um den Müllbeutel bis zum Schnittpunkt der ersten festen Kante und der zweiten festen Kante zu raffen, in deren Nähe eine Wärmefusionsvorrichtung (4) zum Wärmefusionieren und Versiegeln des Müllbeutels angeordnet ist; und wobei der Absackmechanismus ferner eine Antriebseinrichtung (9) zum Antreiben der ersten Druckstange (2) und der zweiten Druckstange (3) umfasst, um diese zu bewegen.

2. Intelligenter Müllbehälter nach Anspruch 1, wobei eine erste feststehende Stange (5) des Absackmechanismus und eine zweite feststehende Stange (6) des Absackmechanismus, die die erste feststehende Stange (5) schneidet, fest an den Oberseiten von Innenflächen des Körpers des Müllbehälters (1) angeordnet sind, wobei eine Seitenkante der ersten feststehenden Stange (5) die zweite erste feststehende Kante bildet und eine Seitenkante der zweiten feststehenden Stange (6) die erste feststehende Kante bildet.

3. Intelligenter Müllbehälter nach Anspruch 2, wobei der Körper des Müllbehälters (1) einen Aufnahmeabschnitt (13) und einen Hauptabdeckungsabschnitt (8) umfasst, der sich auf dem Aufnahmeabschnitt (13) befindet; und wobei die erste Druckstange (2), die zweite Druckstange (3), die erste feststehende Stange (5), die zweite feststehende Stange (6), die Antriebseinrichtung (9) und die Wärmefusionsvorrichtung (4) alle innerhalb des Hauptabdeckungsabschnitts (8) angeordnet sind.

4. Intelligenter Müllbehälter nach Anspruch 3, wobei die zweite Druckstange (3) parallel zur ersten feststehenden Stange (5) und die erste Druckstange (2) parallel zur zweiten feststehenden Stange (6) angeordnet ist, und wobei Führungsmittel jeweils zwischen der ersten Druckstange (2) und der ersten feststehenden Stange (5), zwischen der ersten Druckstange (2) und der zweiten Druckstange (3), zwischen der zweiten Druckstange (3) und der zweiten feststehenden Stange (6) und zwischen der zweiten Druckstange (3) und der ersten Druckstange (2) vorgesehen sind, und wobei unter der Führung dieser Führungsmittel die erste Druckstange (2) und die zweite Druckstange (3) in der Lage sind, das offene Ende des Müllbeutels zum Schnittpunkt der ersten festen Kante und der zweiten festen Kante zu sammeln.

5. Intelligenter Müllbehälter nach Anspruch 4, wobei die erste Druckstange (2) einen Führungsschlitz (7) definiert, der sich axial dazu erstreckt und durch den ein Ende der zweiten Druckstange (3) eingeführt wird; wobei die erste Druckstange (2) ferner an einem Ende ein erstes Führungsloch für den Durchgang der ersten feststehenden Stange (5) dadurch definiert; wobei die erste Druckstange (2) in der Lage ist, sich axial in Bezug auf die erste feststehende Stange (5) und die zweite Druckstange (3) hin- und her zu bewegen, wobei die zweite Druckstange (3) weiterhin an einem Ende ein zweites Führungsloch für den Durchgang der zweiten feststehenden Stange (6) definiert; und die zweite Druckstange (3) in der Lage ist, sich axial in Bezug auf die zweite feststehende Stange (6) und die erste Druckstange (2) hin- und her zu bewegen.

6. Intelligenter Müllbehälter nach Anspruch 1, wobei ferner eine Grundplatte (10) vorgesehen ist, die aus einem elastischen, flexiblen Material besteht und an einer der Wärmefusionsvorrichtung (4) entsprechenden Seite der zweiten Druckstange (3) angeordnet ist.

7. Intelligenter Müllbehälter nach Anspruch 1, wobei die Antriebsmittel (9) einen Motor, eine Getriebeanordnung und eine Synchronriemenanordnung (11) umfassen, wobei der Motor antriebsmässig mit der Getriebeanordnung verbunden ist, wobei die Getriebeanordnung eingreifend mit der Synchronriemenanordnung (11) verbunden ist, und wobei die erste Druckstange (2) und die zweite Druckstange (3) an der Synchronriemenanordnung (11) befestigt sind.

8. Intelligenter Müllbehälter nach Anspruch 1, wobei die Antriebsmittel (9) einen Motor, eine Getriebeanordnung und eine Niveauschraubenanordnung umfassen, wobei der Motor antriebsmässig mit der Getriebeanordnung verbunden ist, wobei die Getriebeanordnung eingreifend mit der Niveauschraubenanordnung verbunden ist, wobei die erste Druckstange (2) und die zweite Druckstange (3) mit der Niveauschraubenanordnung durch Drehpaare verbunden sind.

9. Intelligenter Müllbehälter nach Anspruch 1, wobei die Wärmefusionsvorrichtung (4) umfasst:
einen Heizdraht (44) zum Schmelzschneiden und thermischen Versiegeln eines offenen Endes eines Müllbeutels (4), wobei der Heizdraht (44) mit einem Wärmefusionskreislauf verbunden ist;
eine Basis (41) mit hitzebeständigen und isolierenden Eigenschaften, wobei die Basis (41) eine erste Endfläche (411) aufweist, auf der der Heizdraht (44) angeordnet ist;
einen Sensor zum Erfassen einer Temperatur des Heizdrahtes; und
einen Steuermechanismus, wobei sowohl der Sensor als auch der Wärmefusionskreislauf kommunikativ mit dem Steuermechanismus gekoppelt sind, wobei der Steuermechanismus so konfiguriert ist, dass er den Wärmefusionskreislauf steuert, und der Steuermechanismus so konfiguriert ist, dass er die Temperatur des Heizdrahtes auf der Grundlage eines von dem Sensor erfassten Wertes steuert.

10. Intelligenter Müllbehälter nach Anspruch 1, wobei die Wärmefusionsvorrichtung (4) ferner eine Stützplatte (43) umfasst, die zwischen der Basis (41) und dem Heizdraht (44) angeordnet ist, wobei die Stützplatte (43) eine flache Oberfläche aufweist, auf der der Heizdraht (44) abgestützt ist.

11. Intelligenter Müllbehälter nach Anspruch 1, wobei die Wärmefusionsvorrichtung (4) umfasst:
einen Heizdraht (44) zum Schmelzschneiden und thermischen Versiegeln eines offenen Endes eines Müllbeutels, wobei der Heizdraht (44) mit einem Wärmeschmelzkreislauf verbunden ist;
eine Basis (41) mit hitzebeständigen und isolierenden Eigenschaften, wobei die Basis (41) eine erste Endfläche aufweist, auf der der Heizdraht (44) angeordnet ist; und
einen Steuermechanismus, der kommunikativ mit dem Wärmeschmelzkreislauf zu dessen Steuerung gekoppelt ist.

12. Intelligenter Müllbehälter nach Anspruch 9 oder 11, wobei der Heizdraht (44) an beiden Enden gebogene Abschnitte (442) aufweist, die durch entsprechende Durchgangslöcher oder Schlitze in der Basis (41) gesteckt und über einen Kabelbaum (46) mit dem Wärmeschmelzkreislauf verbunden sind.

13. Intelligenter Müllbehälter nach Anspruch 12, wobei die gebogenen Abschnitte (442) des Heizdrahtes (44) mit dem Kabelbaum (46) mittels Kaltcrimpklemmen (45) verbunden sind.

14. Intelligenter Müllbehälter nach Anspruch 12, wobei eine zweite Endfläche (412) der Basis (41), die der ersten Endfläche (411) desselben gegenüberliegt, eine Kabelnut definiert, in der der Kabelbaum (46) aufgenommen ist.

## Revendications

1. Un réceptacle de déchets intelligent comprenant un mécanisme d'ensachage disposé à l'intérieur d'un corps du réceptacle de déchets (1), dans lequel un premier bord fixe du mécanisme d'ensachage et un second bord fixe du mécanisme d'ensachage intersectant le premier bord fixe sont prévus au sommet des surfaces internes du corps du réceptacle de déchets (1); le mécanisme d'ensachage comprend une première barre de pression (2), qui peut glisser le long du deuxième bord fixe pour rassembler l'extrémité ouverte du sac à déchets sur le premier bord fixe, et une deuxième barre de pression (3), qui est capable de glisser le long du premier bord fixe pour rassembler l'extrémité ouverte du sac à déchets sur le deuxième bord fixe, la première barre de pression (2) et la deuxième barre de pression (3) pouvant en outre travailler ensemble pour rassembler le sac à déchets jusqu'à l'intersection du premier bord fixe et du second bord fixe, au voisinage desquels, un dispositif de fusion thermique (4) est disposé pour thermofusionner et sceller le sac à déchets; et le mécanisme d'ensachage comprend en outre des moyens d'entraînement (9) pour entraîner le déplacement de la première barre de pression (2) et de la seconde barre de pression (3).

2. Le réceptacle de déchets intelligent selon la revendication 1, dans lequel une première barre fixe (5) du mécanisme d'ensachage et une seconde barre fixe (6) du mécanisme d'ensachage intersectant la première barre fixe (5) sont disposées de manière fixe au sommet des surfaces internes du corps du réceptacle de déchets (1), avec un bord latéral de la première barre fixe (5) formant le deuxième premier bord fixe, et un bord latéral de la deuxième barre fixe (6) formant le premier bord fixe.

3. Le réceptacle de déchets intelligent selon la revendication 2, dans lequel le corps du réceptacle de déchets (1) comprend une section de réceptacle (13) et une section de couvercle principal (8) résidant sur la section de réceptacle (13); et la première barre de pression (2), la deuxième barre de pression (3), la première barre fixe (5), la deuxième barre fixe (6), les moyens d'entraînement (9) et le dispositif de fusion thermique (4) sont tous disposés à l'intérieur de la section principale du couvercle (8).

4. Le réceptacle de déchets intelligent selon la revendication 3, dans lequel la seconde barre de pression (3) est disposée parallèlement à la première barre fixe (5) et la première barre de pression (2) à la seconde barre fixe (6), et dans lequel des moyens de guidage sont prévus respectivement entre la première barre de pression (2) et la première barre fixe (5), entre la première barre de pression (2) et la deuxième barre de pression (3), entre la deuxième barre de pression (3) et la deuxième barre fixe (6) et entre la deuxième barre de pression (3) et la première barre de pression (2), et sous le guidage de ces moyens de guidage, la première barre de pression (2) et la deuxième barre de pression (3) sont capables de rassembler l'extrémité ouverte du sac à déchets à l'intersection du premier bord fixe et du second bord fixe.

5. Le réceptacle de déchets intelligent selon la revendication 4, dans lequel la première barre de pression (2) définit une fente de guidage (7), qui s'étend axialement par rapport à celle-ci, et à travers laquelle une extrémité de la seconde barre de pression (3) est insérée; la première barre de pression (2) définit en outre, à une extrémité, un premier trou de guidage pour le passage de la première barre fixe (5) à travers de celui-ci; la première barre de pression (2) peut effectuer un mouvement de va-et-vient axial par rapport à la première barre fixe (5) et à la deuxième barre de pression (3), la deuxième barre de pression (3) définissant en outre, à une extrémité, un deuxième trou de guidage pour le passage de la deuxième barre fixe (6) à travers de celui-ci; et la deuxième barre de pression (3) peut effectuer un mouvement de va-et-vient axial par rapport à la deuxième barre fixe (6) et à la première barre de pression (2).

6. Le réceptacle de déchets intelligent selon la revendication 1, dans lequel une plaque de base (10) est en outre prévue, qui est un matériau flexible élastique disposé sur un côté latéral de la seconde barre de pression (3) correspondant au dispositif de fusion thermique (4).

7. Le réceptacle de déchets intelligent selon la revendication 1, dans lequel les moyens d'entraînement (9) comprennent un moteur, un ensemble d'engrenages et un ensemble de courroie synchrone (11), le moteur étant relié par entraînement à l'ensemble d'engrenages, l'ensemble d'engrenages étant relié par engagement à l'ensemble de courroie synchrone (11), et dans lequel la première barre de pression (2) et la seconde barre de pression (3) sont fixées à l'ensemble de courroie synchrone (11).

8. Le réceptacle de déchets intelligent selon la revendication 1, dans lequel les moyens d'entraînement (9) comprennent un moteur, un ensemble d'engrenage et un ensemble de vis de niveau, le moteur étant relié par entraînement à l'ensemble d'engrenages, l'ensemble d'engrenages étant relié par engagement à l'ensemble de vis de niveau, dans lequel la première barre de pression (2) et la seconde barre de pression (3) sont reliées à l'ensemble de vis de niveau par paires de révolution.

9. Le réceptacle de déchets intelligent selon la revendication 1, dans lequel le dispositif de fusion thermique (4) comprend:
un fil chauffant (44) pour couper par fusion et sceller thermiquement une extrémité ouverte d'un sac à déchets (4), le fil chauffant (44) étant connecté à un circuit de fusion thermique;
une base (41) ayant des propriétés de résistance à la chaleur et d'isolation, la base (41) ayant une première surface d'extrémité (411) sur laquelle le fil chauffant (44) est disposé;
un capteur pour détecter une température du fil chauffant; et
un mécanisme de commande, dans lequel chacun du capteur et du circuit de fusion thermique est couplé en communication au mécanisme de commande, le mécanisme de commande est configuré pour contrôler le circuit de fusion thermique, et le mécanisme de commande est configuré pour contrôler la température du fil chauffant basé sur une valeur détectée par le capteur.

10. Le réceptacle de déchets intelligent selon la revendication 1, dans lequel le dispositif de fusion thermique (4) comprend en outre une plaque de support (43) disposée entre la base (41) et le fil chauffant (44), la plaque de support (43) ayant une surface plane sur laquelle le fil chauffant (44) est supporté.

11. Le réceptacle de déchets intelligent selon la revendication 1, dans lequel le dispositif de fusion thermique (4) comprend:
un fil chauffant (44) pour couper par fusion et sceller thermiquement une extrémité ouverte d'un sac à déchets, le fil chauffant (44) étant connecté à un circuit de fusion thermique;
une base (41) ayant des propriétés de résistance à la chaleur et d'isolation, la base (41) ayant une première surface d'extrémité sur laquelle le fil chauffant (44) est disposé; et
un mécanisme de commande couplé en communication au circuit de fusion thermique pour le commander.

12. Le réceptacle de déchets intelligent selon la revendication 9 ou 11, dans lequel le fil chauffant (44) a des parties pliées (442) aux deux extrémités, qui sont insérées à travers des trous ou des fentes traversant(e)s correspondant(e)s respectifs dans la base (41) et connectées au circuit de fusion thermique par un faisceau de câbles (46).

13. Le réceptacle de déchets intelligent selon la revendication 12, dans lequel les parties pliées (442) du fil chauffant (44) sont connectées au faisceau de câbles (46) au moyen de bornes à sertir à froid (45).

14. Le réceptacle de déchets intelligent selon la revendication 12, dans lequel une seconde surface d'extrémité (412) de la base (41), qui s'oppose à la première surface d'extrémité (411) de celle-ci, définit une rainure de câble dans laquelle le faisceau de câbles (46) est reçu.
